# NEUE EUROPÄISCHE PATENTSCHRIFT

(11) **EP 3 048 295 B2**
(45) Veröffentlichungstag und Bekanntmachung des Hinweises auf die Entscheidung über den Einspruch: **23.02.2022**
(45) Hinweis auf die Patenterteilung: 29.08.2018
(21) Anmeldenummer: 16150541.7
(22) Anmeldetag: 08.01.2016
(51) Int. Cl.: F03D 1/00, E04B 1/98, F03D 80/00, F03D 13/20, F03D 13/10

(54) **VERFAHREN ZUM ERRICHTEN EINER WINDENERGIEANLAGE UND WINDENERGIEANLAGE**
METHOD FOR ERRECTING A WIND ENERGY SYSTEM AND WIND ENERGY SYSTEM
PROCEDE DE MONTAGE D'UNE EOLIENNE ET EOLIENNE

(30) Priorität: 26.01.2015 DE 102015000788
(43) Veröffentlichungstag der Anmeldung: 27.07.2016
(73) Patentinhaber: Siemens Gamesa Renewable Energy Service GmbH, 22297 Hamburg (DE)
(72) Erfinder: SEIDEL, Marc, 49082 Osnabrück (DE)
(74) Vertreter: Wallinger Ricker Schlotter Tostmann

(56) Entgegenhaltungen:
- EP-A2- 1 677 003
- WO-A1-00/77394
- WO-A2-2010/015507
- US-A1- 2008 145 222
- US-A1- 2012 063 915
- US-A1- 2012 267 207

## Beschreibung

Die Erfindung betrifft ein Verfahren zum Errichten einer Windenergieanlage mit einem Turm und einem an der Turmspitze angeordneten Maschinenhaus, wobei zunächst ein Turmrohbau errichtet wird, indem in einer Turmrohbauphase, in der auf dem Turmrohbau noch kein Maschinenhaus aufgesetzt ist, in einem Turmrohbaustadium oder mehreren Turmrohbaustadien eine oder mehrere Turmsektionen zu einem, im Falle mehrerer Turmsektionen mit jeder Turmsektion größer werdenden, Turmrohbau aufeinandergesetzt werden, bis eine Endhöhe des Turmrohbaus erreicht ist, wobei nach vollständiger Errichtung des Turmrohbaus aus allen Turmsektionen das Maschinenhaus auf die Spitze des Turmrohbaus aufgesetzt wird und mit dem Turmrohbau drehbar verbunden wird. Die Erfindung betrifft weiter eine entsprechende Windenergieanlage.

Moderne Windenergieanlagen umfassen einen hohen Turm mit einer vertikalen Längsachse, häufig bestehend aus mehreren Turmsektionen, an dessen Spitze ein Maschinenhaus bzw. eine Gondel mit einem Rotor mit mehreren Rotorblättern und einer horizontalen Rotorachse um die Turmachse drehbar gelagert ist.

Türme von Onshore-Windenergieanlagen werden üblicherweise sektionsweise aus mehreren Sektion und direkt vor Ort an der Baustelle auf einem Fundament errichtet. Turmsektionen für solche Windenergieanlagen werden meist liegend zum Errichtungsort transportiert. Bei der Errichtung eines Turms einer Windenergieanlage werden die in der Regel mehreren einzelnen Turmsektionen nacheinander mit Hilfe eines Hebezeugs aus ihrer liegenden Position in eine aufgerichtete Position gebracht und auf einem Fundament, einem Hilfsfundament bzw. einer Einspannstelle und/oder einer zuletzt errichteten Turmsektion aufgesetzt und mit diesem oder dieser verbunden. Die Turmlängsachse wird dabei aus einer horizontalen in eine vertikale Orientierung gebracht.

Türme für Offshore-Windenergieanlagen hingegen werden vorzugsweise sektionsweise am Hafen der Verschiffung auf Hilfsfundamenten errichtet. Anschließend werden die zum Transport fertig errichteten Türme bzw. vertikal aufgerichteten Turmsektionen im Hafen auf ein Errichterschiff verladen und dort auf trägerrostartigen Hilfsfundamenten für den Transport, sog. "Grillages", befestigt. Aus Platzgründungen werden Offshore-Türme bevorzugt aufrecht stehend transportiert. Erst im Anschluss an die vollständige Turmerrichtung wird das Maschinenhaus, die sogenannte Gondel, auf dem Turm befestigt.

Bei Windenergieanlagentürmen handelt es sich um stark schwingungsanfällige Bauteile. Ein freistehender Turm ohne Gondel weist hierbei allerdings eine deutlich andere Eigenfrequenz auf als ein Turm mit einem an der Spitze angeordneten Maschinenhaus und Rotor.

Während der Errichtung einer Windenergieanlage bedeutet dies, dass ein freistehender und gondelloser Turm bzw. Turmrohbau, der an seiner Spitze noch nicht mit dem Gewicht des Maschinenhauses belastet ist, mit einer höheren Frequenz schwingt als nach dem Aufsetzen des Maschinenhauses.

Jede Struktur, so auch eine Windenergieanlage oder ein Windenergieanlagenturm, reagiert auf äußere Anregung, bspw. durch Wind oder Wellen, in einer bestimmten Frequenz mit eigenen Schwingungen, abhängig von der Frequenz der Anregung. Zudem hat jede Struktur sogenannte Eigenfrequenzen. Dies sind die Frequenzen, in denen das System schwingt, wenn es ausgelenkt und dann sich selbst überlassen wird. Für Windenergieanlagen relevant ist insbesondere die erste Eigenfrequenz, deren zugehörige erste Eigenform im Wesentlichen aus einer Biegeverformung des Turmes besteht. Sie wird daher auch "erste Biegeeigenfrequenz" genannt. Die zugehörige Eigenform ist die "erste Biegeeigenform". Diese Frequenz verändert sich, wenn weitere Bauteile hinzukommen, bspw. ein Windenergieanlagenturm höher wird. Sie ist also erheblich vom Bauzustand abhängig.

Im Rahmen der vorliegenden Erfindung umfasst der Begriff der Eigenfrequenz im jeweiligen Zusammenhang die Eigenfrequenz eines Windenergieanlagenturms an sich bzw. die Eigenfrequenz einer Kombination von Turm und (Hilfs-) Fundament bzw. Einspannung, also im Wesentlichen die Eigenfrequenz des einseitig eingespannten bzw. befestigten Turms.

Kritisch wird eine Schwingungsanregung besonders dann, wenn sie sich im Frequenzbereich mit der Eigenfrequenz der Struktur überlagert und so zu Resonanzschwingungen führt, die die Struktur zerstören können.

Windenergieanlagen werden hauptsächlich durch den auftreffenden Wind zum Schwingen angeregt. Bei fertig errichteten, in Betrieb genommenen Anlagen treten Schwingungen des Turms vor allem in Reaktion auf die Belastung des Rotors durch den Wind auf. Bei Offshore-Windenergieanlagen muss zudem die Anregung aus der Meeresbewegung in Form von auftreffenden Wellen berücksichtigt werden.

Hauptursache für Schwingungen freistehender Turmrohbauten sind Wirbelablösungen, die sogenannten Karman'schen Wirbel, die zu wirbelerregten Querschwingungen (WEQ bzw. "vortex induced vibrations" - VIV) führen. Hierbei handelt es sich um eine Folge von Wirbelablösungen des den Turm umströmenden Windes bzw. Windfeldes, abwechselnd auf der in Windrichtung gesehen linken und rechten Seite des Turms. Die Schwingung des Turms und die Wirbelablösungen verstärken sich gegenseitig. Nach Aufsetzen des Maschinenhauses und Inbetriebnahme der Windenergieanlage ändert sich die Eigenfrequenz des Turms so, dass WEQ sich nur noch bei niedrigen Windgeschwindigkeiten mit der Turmeigenfrequenz überlagern und dann wenig kritisch sind. Schwingungen des Turms treten dann vor allem in Reaktion auf die Belastung des Rotors durch den Wind sowie offshore zusätzlich durch Anregung von Wellen auf.

Grundsätzlich sind die Eigenfrequenzen der gondellosen Türme höher als die vollständig montierter Anlagen. Es existieren dann Bedingungen, bei denen Anregungen durch Karman'sche Wirbel bei häufig vorkommenden Windgeschwindigkeiten WEQ induzieren. Entsprechend werden die Amplituden der Schwingungen größer, so dass die mechanischen und strukturellen Belastungen auf die Windenergieanlagentürme entsprechend wachsen.

Da die WEQ bei bestimmten Windgeschwindigkeiten und ihnen zugehörigen Frequenzen der wechselseitigen Wirbelablösung auftreten, müssen Türme von Windenergieanlagen im Rohbauzustand ohne aufgesetztes Maschinenhaus ab einer bestimmten Länge entweder gesichert werden, beispielsweise durch Abspannungen, oder es müssen Maßnahmen zur Verhinderung von Wirbelablösungen getroffen werden. Anderenfalls können WEQ dazu führen, dass der Turm zerstört wird. Unterhalb einer kritischen Länge besteht diese Gefahr nicht oder nur in wesentlich geringerem Maße, da die Eigenfrequenzen der kürzeren Turmstümpfe mit wenigen Turmsektionen in einem höheren Frequenzbereich liegen, deren zugehörige hohe Windgeschwindigkeiten realistisch nicht erwartet werden müssen.

Eine kritische Windgeschwindigkeit, bei der wirbelerregte Querschwingungen für den Turmrohbau gefährlich sind, liegt für einen komplett errichteten Turm ohne Gondel, abhängig von seiner Höhe und seiner Steifigkeit, üblicherweise zwischen 10 m/s und 25 m/s, weshalb eine Errichtung unzulässig ist, wenn diese Windgeschwindigkeiten erwartet werden und nicht direkt die Gondel nach dem Hub des letzten Turmschusses gezogen werden kann.

Bei der Errichtung einer Windenergieanlage wird diesem Umstand dadurch Rechnung getragen, dass die letzte Turmsektion oder gegebenenfalls die letzten Sektionen des Turms und des Maschinenhauses auf den Turm in einem Wetterfenster mit ruhiger Witterung, vorzugsweise bei Windgeschwindigkeiten von max. 9 m/s, installiert bzw. aufgesetzt werden. Solche Wetterfenster müssen wenigstens einige Stunden oder Tage lang sein. Das Warten auf ein geeignetes Wetterfenster kann daher die Errichtung einer Windenergieanlage erheblich verzögern und dadurch hohe Kosten verursachen.

Die Folgen des Schwingungsproblems sind aufgrund der offshore im Durschnitt kräftigeren Winde offshore stärker zu spüren als onshore. Im Gegensatz zu der sektionsweisen Errichtung von Onshore-Türmen werden Offshore-Türme in der Regel bereits im Hafen aus mehreren Turmsektionen mit einer senkrecht gestellten Längsachse zusammengesetzt und aus Platzgründen vorzugsweise aufrecht stehend auf einem Errichterschiff transportiert. Während des Transports sind die Türme oder Turmsektionen einer Anregung durch Wind bzw. Wellen ausgesetzt. Bereits hier können WEQ auftreten. Weiter sind die zur Errichtung geeigneten Wetterfenster offshore aufgrund von im Allgemeinen stetigeren und höheren Windgeschwindigkeiten kürzer sodass in der Regel länger als onshore auf ein zur Errichtung geeignetes Wetterfenster gewartet werden muss, was wiederrum mit entsprechend hohen Mehrkosten für die Offshore-Baustelle verbunden ist.

Bei dem Transport auf einem Errichterschiff kommt hinzu, dass zusätzlich der Fahrtwind den ohnehin herrschenden Wind verstärken kann, so dass WEQ noch stärker auftreten können. Außerdem kann ein Turm oder eine Turmsektion zusätzlich zur Schwingung angeregt durch Rollbewegungen des Schiffes werden, die durch den Seegang bedingt sind. Errichterschiffe sind üblicherweise nicht mit einem eigenen Flüssigkeits-Rollmoment-Dämpfer ausgestattet, die diese Rollbewegungen dämpfen, zumal die Beladung mit den vertikalen Türmen bzw. Turmsektionen die Rollfrequenz so verschieben würde, dass ein solcher Dämpfer wenig Wirkung entfalten kann. Die Rollbewegung führt ebenfalls zu einem gewissen Luftzug an den Spitzen der Türme bzw. Turmsektionen.

Derzeit werden die Türme für Offshore-Windenergieanlagen in der Regel in zwei vormontierten Sektionen transportiert, die anschließend in zwei Hüben nacheinander auf eine Gründungsstruktur im Meer bzw. auf die untere Turmsektion aufgesetzt und verbunden werden. Durch den geteilten Turmtransport sind die kritischen Windgeschwindigkeiten zur Anregung durch WEQ für die untere Sektion so hoch, dass sie nicht im kritischen Maße auftreten.

Wenn aber komplette Türme installiert werden sollen, um die Zeit für Offshore-Arbeiten zu verkürzen, liegen die kritischen Windgeschwindigkeiten aufgrund der erhöhten Turmhöhe dann unterhalb von 20 m/s, können also realistisch auftreten. Es müssen in diesem Fall zwingend Maßnahmen gegen WEQ getroffen werden.

Da Türme für Offshore-Windenergieanlagen in der Regel im Hafen zu einem aufrecht stehenden Turmrohbau vorinstalliert und/oder aufrecht stehend auf einem Installationsschiff transportiert werden, werden sie bislang aufgrund der WEQ ab einer bestimmten Länge entweder durch Abspannungen gesichert oder es werden temporär Wendeln im oberen Turmbereich zur Verhinderung oder Unterdrückung der Wirbelablösung angebracht, wie dies beispielsweise in WO 2006/106162 A2 oder aus EP 1 881 195 A1 bekannt ist. Das praxistaugliche Verwenden von Wendeln erfordert jedoch die Einhaltung bestimmter Kriterien bzgl. der Dicke der Wendeln sowie der Steigung der Wicklung. Der Aufwand für die Installation und die Deinstallation dieser Wendeln offshore ist erheblich.

Aus WO 2008/000265 A1 ist ein turminternes Verspannungssystem bekannt, mit dem die Turmsteifigkeit entsprechend dem Baufortschritt angepasst werden kann, um die Eigenfrequenz des Turmes nicht zu tief absinken zu lassen.

Auch temporär in der Turmspitze verbleibende Schwingungsdämpfer wurden beispielsweise in WO 2014/040598 A1 bereits vorgeschlagen, wonach mehrere Sandsäcke jeweils pendelnd im oberen Bereich der jeweils obersten Turmsektion angeordnet werden.

In US 2012/063915 A1 ist eine Windenergieanlage mit einem an einer Strebe eines Turmsegments aufgehängten Schwingungsdämpfer in Form eines Pendeldämpfers mit einem schwingenden mit Gewichten belasteten Stab offenbart. US 2012/0267207 A1 offenbart eine Windenergieanlage mit einer Vibrationskontrollvorrichtung mit einem Vibrationssystem des Typs eines invertierten Pendels.

Demgegenüber liegt der vorliegenden Erfindung die Aufgabe zugrunde, die Errichtung einer Windenergieanlage weiter zu vereinfachen und sicherer zu gestalten.

Diese Aufgabe wird durch ein Verfahren zum Errichten einer Windenergieanlage mit einem Turm und einem an der Turmspitze angeordneten Maschinenhaus gelöst, wobei zunächst ein Turmrohbau errichtet wird, indem in einer Turmrohbauphase, in der auf dem Turmrohbau noch kein Maschinenhaus aufgesetzt ist, in einem Turmrohbaustadium oder in mehreren Turmrohbaustadien eine oder mehrere Turmsektionen zu einem, im Falle mehrerer Turmsektionen mit jeder Turmsektion größer werdenden, Turmrohbau aufeinandergesetzt werden, bis eine Endhöhe des Turmrohbaus erreicht ist, wobei nach vollständiger Errichtung des Turmrohbaus aus allen Turmsektionen das Maschinenhaus auf die Spitze des Turmrohbaus aufgesetzt wird und mit dem Turmrohbau drehbar verbunden wird, wobei wenigstens ein als Pendeldämpfer ausgebildeter Schwingungsdämpfer in einer zuletzt zur Fertigstellung des Turmrohbaus aufgesetzten Turmsektion angeordnet wird, dessen Dämpfungsfrequenz an eine erste Grundschwingungsfrequenz des Turmrohbaus ohne aufgesetztes Maschinenhaus angepasst ist, wobei der wenigstens eine Pendeldämpfer nach dem Aufsetzen des Maschinenhauses auf den Turmrohbau im Turm verbleibt und die Dämpfungsfrequenz des wenigstens einen Pendeldämpfers an eine zweite Grundschwingungsfrequenz der vollständig errichteten Windenergieanlage angepasst wird oder worden ist, das dadurch weitergebildet ist, dass im Zuge der Errichtung des Turmrohbaus zur Anpassung der Eigenfrequenz des wenigstens einen Pendeldämpfers die Pendellänge vergrößert wird, wobei die Pendellänge durch Abknicken an Trägern oder an einer temporären Plattform im Turm eingestellt wird, oder durch Fixieren von Kettengliedern.

Ein Schwingungsdämpfer entzieht der Turmschwingung Energie, die in eine Schwingung einer gegenüber dem Turm beweglich aufgehängten oder gelagerten schwingenden Masse einfließt. Bei der schwingenden Masse kann es sich um eine Pendelmasse oder eine an Federn aufgehängte Masse handeln. Idealerweise hat die Schwingung der schwingenden Masse bei einer bestimmten Frequenz, die einer ersten Biegemode bzw. Biegeeigenform eines Turms, eines Turmstumpfes oder einer Turmsektion entspricht oder ihr nahekommt, eine Phasenverschiebung von 180° gegenüber der Schwingung des Turms selbst. So sind die aus dem Turm in den Schwingungsdämpfer abgeleitete Schwingungsenergie und die entsprechende Dämpfung der Turmschwingung maximal. Oberhalb und unterhalb der Frequenz maximaler Dämpfung ist die Phasenverschiebung mehr oder weniger als 180°, so dass die dämpfende Wirkung nachlässt.

Die vorliegend verwendeten Begriffe der Dämpfungsfrequenz, der Eigenfrequenz und der Grundschwingungsfrequenz haben im Rahmen der vorliegenden Patentanmeldung die folgenden Bedeutungen. Schwingende Körper, wie beispielsweise ein unbelasteter Turm oder Turmstumpf ohne Schwingungsdämpfer, hat für verschiedene Biegemoden bzw. Biegeeigenformen verschiedene Eigenfrequenzen. Die erste Biegeeigenform eines vertikal aufgerichteten, an seinem unteren Ende befestigten Turms hat keine Schwingungsknoten, während höhere Biegeeigenformen ein, zwei oder mehr Schwingungsknoten aufweisen. Diese weisen zunehmend höhere Eigenfrequenzen auf und werden in der Realität mit steigender Ordnungszahl immer weniger angeregt. Technisch am bedeutsamsten ist die erste Biegeeigenmode, die die niedrigste Eigenfrequenz aufweist und daher im Rahmen der vorliegenden Anmeldung Grundschwingungsfrequenz genannt wird.

Ein Schwingungsdämpfer hat seine eigenen Eigenfrequenzen. Die, vorzugsweise erste bzw. unterste Eigenfrequenz der Schwingung des Schwingungsdämpfers wird vorzugsweise gleich oder nahe der Grundschwingungsfrequenz des Turms, also der Eigenfrequenz der ersten Biegeeigenform des Turms, gewählt.

Die Dämpfungsfrequenz ist hingegen eine Eigenschaft des gekoppelten Systems Turm und Schwingungsdämpfer. Im gekoppelten System ergibt sich ein Dämpfungsspektrum mit einer maximalen Dämpfung bei einer bestimmten Frequenz und einer oberhalb und unterhalb dieser Frequenz maximaler Dämpfung abnehmenden Dämpfung. Die Frequenz der maximalen Dämpfung wird im Rahmen der vorliegenden Anmeldung Dämpfungsfrequenz genannt. Dieses gekoppelte System hat eigene Eigenfrequenzen, u.a. die Dämpfungsfrequenz, die nahe bei, aber nicht identisch mit den Eigenfrequenzen der ungekoppelten Bestandteile sind. Ein in einen Turm eingebauter Schwingungsdämpfer schwingt daher bei maximaler Dämpfung nicht mit seiner eigenen Eigenfrequenz.

Die Anpassung der Eigenfrequenz des Schwingungsdämpfers hat somit unmittelbar auch eine Anpassung der Dämpfungsfrequenz, also eine Verschiebung des Dämpfungsspektrums, zur Folge.

Im Unterschied zum Stand der Technik verbleibt bzw. verbleiben der oder die für den Rohbauzustand des Turmes eingesetzte(n) Schwingungsdämpfer in der fertiggestellten Windenergieanlage in der obersten Turmsektion bzw. im Turm unterhalb des Maschinenhauses. Dabei ist bzw. sind der oder die Schwingungsdämpfer so ausgestaltet, dass die Dämpfungsfrequenzen des Schwingungsdämpfers bzw. der Schwingungsdämpfer anpassbar sind bzw. ist an die verschiedenen auftretenden Grundschwingungen eines gondellosen Turmrohbaus und einer vollständigen Windenergieanlage. Diese Schwingungsfrequenzen unterscheiden sich zwischen dem Rohbau und der fertig errichteten Windenergieanlage um Faktoren im Bereich zwischen 2 und 10, abhängig vom Windenergieanlagentyp. So liegen die auftretenden Turmeigenfrequenzen im Bauzustand, d.h. im Turmrohbau zwischen 0,2 Hz und 1 Hz, im Endzustand aber zwischen unter 0,1 Hz und 0,3 Hz. Eine solche Änderung erfordert eine starke Konfigurierbarkeit und Veränderbarkeit des Schwingungsdämpfers bzw. der Schwingungsdämpfer.

Aus dem Stand der Technik sind auch Schwingungsdämpfer für den Endzustand der Windenergieanlage bekannt. Bei diesen ist allerdings die Dämpfermasse und Eigenfrequenz nicht für den Turmrohbauzustand angepasst.

Im Rahmen der vorliegenden Erfindung können auch mehrere Schwingungsdämpfer mit gleicher Eigenfrequenz oder mit unterschiedlichen Eigenfrequenzen eingesetzt werden.

Durch das erfindungsgemäße Verfahren ist es möglich, den bereits im Bauzustand verwendeten Schwingungsdämpfer mit nur geringen Modifikationen in der obersten Turmsektion zu belassen, so dass ein Ausbau des Schwingungsdämpfers aus der obersten Turmsektion vor oder nach dem Aufsetzen des Maschinenhauses nicht mehr notwendig ist. Außerdem wird hierdurch die Stabilität der Windenergieanlage und damit die Standsicherheit und Betriebssicherheit der Windenergieanlage verbessert. Die maximal zu erwartenden strukturellen Lasten auf dem Turm der Windenergieanlage verringern sich durch die Schwingungsdämpfung bereits in der Turmrohbauphase, so dass der Turm leichter und günstiger konstruiert werden kann. Umgekehrt ist es somit auch möglich, für den Normalbetrieb ausgelegte Schwingungsdämpfer lediglich für den Bauzustand zu modifizieren und diese Modifikation für den Endzustand der Windenergieanlage wieder zu beseitigen.

In einer vorteilhaften Weiterbildung erfolgt die Anpassung der Eigenfrequenz des wenigstens einen Schwingungsdämpfers an die Grundschwingungsfrequenz der vollständig errichteten Windenergieanlage nach oder kurz vor dem Aufsetzen des Maschinenhauses auf den Turm bzw. Turmrohbau. Dieser Verfahrensschritt ist in kurzer Zeit, meist weniger als einer Stunde, verbracht, so dass auch relativ kurze Zeitfenster bzw. Wetterfenster diesen Arbeitsschritt erlauben. Da das Aufsetzen des Maschinenhauses bereits dazu führt, dass die WEQ unterdrückt werden, erfolgt die Anpassung des Schwingungsdämpfers vorzugsweise nach dem Aufsetzen des Maschinenhauses, so dass kein kritisches Zeitfenster mit unangepasstem Schwingungsdämpfer im WEQ-anfälligen Turmrohbau entsteht.

Vorzugsweise ist die Eigenfrequenz des wenigstens einen Pendeldämpfers zwischen wenigstens einer ersten Frequenz im Bereich von 0,2 bis 1 Hz und wenigstens einer zweiten Frequenz im Bereich von 0,1 bis 0,3 Hz veränderbar, wobei sich die erste Frequenz und die zweite Frequenz um einen Faktor von 2 oder mehr, insbesondere um wenigstens einen Faktor 3, voneinander unterscheiden. Durch den Faktor wird wirksam der Unterschied zwischen den Grundschwingungsfrequenzen des Turms im Rohbauzustand und nach Aufsetzen des Maschinenhauses überbrückt.

Der wenigstens eine Schwingungsdämpfer ist vorteilhafterweise als Pendeldämpfer in Kombination mit Federn an der Pendelmasse und/oder mit viskoser Pendeldämpfung, ausgebildet. Ebenfalls vorteilhafterweise sind mehrere Schwingungsdämpfer gleichen oder unterschiedlichen Typs umfasst.

Pendeldämpfer weisen an vertikalen Seilen oder Ketten aufgehängte Massen auf, die entsprechend ihrer Pendellänge mit ihrer eigenen Schwingungsfrequenz pendeln. Feder-Masse-Dämpfer und Pendeldämpfer können frei pendeln oder in einer viskosen Flüssigkeit rühren, so dass die Pendelbewegung gedämpft wird. Die Pendelmasse kann auch mit Federn seitlich aufgehängt sein und somit eine Mischform aus Pendeldämpfer und Feder-Masse-Dämpfer darstellen.

Für den Einsatz in Turmsektionen oder Türmen haben Schwingungsdämpfer mit geringer vertikaler Ausdehnung den Vorteil, platzsparend zu sein. Ungedämpfte Pendel sind nur bedingt geeignet, da beispielsweise für eine Frequenz von 0,2 Hz bereits eine Pendellänge von über 6 m notwendig ist, bei 0,1 Hz von ca. 25 m. Verringert wird die notwendige Pendellänge, wenn die Pendelmasse durch eine viskose Flüssigkeit, d.h. mittels einer viskosen Pendeldämpfung, gedämpft wird.

Eine Kombination von Federn an der Pendelmasse und einer viskosen Pendeldämpfung kann beispielsweise im Rahmen der vorliegenden Erfindung so aussehen, dass im Turmrohbaustadium zunächst die Pendelmasse pendelnd und mit Federn eingespannt ausgebildet ist, mit zunehmender Turmrohbauhöhe die Federn weggelassen werden, um die Pendelfrequenz zu modifizieren und im letzten Abschnitt für die Erreichung der Grundschwingungsfrequenz der vollständigen Windenergieanlage ein Dämpfungsbad mit viskoser Flüssigkeit installiert wird. Alternativ kann das Dämpfungsbad mit viskoser Flüssigkeit auch bereits vorhanden sein, und entweder in jeweils gleicher Eintauchtiefe verbleiben oder mit jedem Abschnitt näher an die Pendelmasse herangebracht werden, so dass ein in die viskose Flüssigkeit eintauchender Teil ein mit jedem Hub in eine weitere Turmsektion steigenden Widerstand erfährt und somit stärker abgebremst wird. Auch der umgekehrte Fall ist möglich. So kann individuell eingestellt werden, dass die Energiedissipation mit steigender Turmhöhe zu- oder abnimmt. Dies kann mit einer Federaufhängung kombiniert werden, diese kann jedoch auch entbehrlich sein.

Vorzugsweise umfasst der Schwingungsdämpfer eine viskose Dämpfung. Dies ist bei Flüssigkeitsdämpfern wie dem Schwappdämpfer oder dem TLCD inhärent der Fall, da die schwingende Flüssigkeit eine Viskosität aufweist und somit eine Energiedissipation stattfindet. Im Falle des Feder-Masse-Dämpfers und des Pendeldämpfers erfolgt bei einer viskosen Dämpfung eine Energiedissipation in der oben beschriebenen Weise durch Rühren in einer viskosen Flüssigkeit.

In einem Fall, dass ein Pendeldämpfer in Kombination mit Federn an der Pendelmasse eingesetzt wird, ist vorzugsweise vorgesehen, dass im Zuge der Errichtung des Turmrohbaus zur Anpassung der Eigenfrequenz des wenigstens einen Dämpfers die Anzahl der Federn reduziert wird und/oder eingesetzte Federn durch Federn mit einer geringeren Federkraft ersetzt werden.

Bei dem Pendeldämpfer wird im Zuge der Errichtung des Turmrohbaus zur Anpassung der Eigenfrequenz des wenigstens einen Dämpfers erfindungsgemäß die Pendellänge vergrößert, wobei die Pendellänge durch Abknicken an Trägern eingestellt wird, die an der Turmwand angeordnet oder von einer Plattform im Turm abgehängt sind, oder durch Fixieren von Kettengliedern.

Verschiedene Schwingungsdämpfertypen, also unterschiedliche Flüssigkeitsdämpfer, Feder-Massedämpfer und Pendeldämpfer, gedämpft oder ungedämpft, sind auch im Rahmen der Erfindung miteinander kombinierbar.

Vorteilhafterweise sind Grundschwingungsfrequenzen eines Turmrohbaus in wenigstens einem Turmrohbaustadium und der vollständig errichteten Windenergieanlage bereits vor Beginn der Errichtung der Windenergieanlage berechnet oder bestimmt und sind die Eigenfrequenzen des wenigstens einen Pendeldämpfers hieran angepasst.

Die der Erfindung zugrunde liegende Aufgabe wird auch durch einen Schwingungsdämpfer für eine Windenergieanlage gelöst, der in einer zuletzt zur Fertigstellung des Turmrohbaus aufgesetzten Turmsektion befestigbar ist, wobei eine Eigenfrequenz des Schwingungsdämpfer an eine erste Grundschwingungsfrequenz eines Turmrohbaus der Windenergieanlage ohne aufgesetztes Maschinenhaus und an eine zweite Grundschwingungsfrequenz der Windenergieanlage mit aufgesetztem Maschinenhaus anpassbar ist, wobei insbesondere die Eigenfrequenz des wenigstens einen Schwingungsdämpfers zwischen wenigstens einer ersten Frequenz im Bereich von 0,2 bis 1 Hz und wenigstens einer zweiten Frequenz im Bereich von 0,1 bis 0,3 Hz veränderbar ist, wobei sich die erste Frequenz und die zweite Frequenz um einen Faktor von 2 oder mehr, insbesondere um wenigstens einen Faktor 3, voneinander unterscheiden, wobei der Schwingungsdämpfer als Pendeldämpfer, insbesondere als Pendeldämpfer in Kombination mit Federn an der Pendelmasse, insbesondere mit viskoser Dämpfung, ausgebildet ist, wobei zur Anpassung der Eigenfrequenz bei einem Pendeldämpfer die Pendellänge vergrößert oder verkleinert wird, wobei die Pendellänge durch Abknicken an Trägern oder an einer temporären Plattform im Turm eingestellt wird, oder durch Fixieren von Kettengliedern. Die viskose Dämpfung ergibt sich wie oben zum erfindungsgemäßen Verfahren beschrieben entweder durch die Art des Dämpfers als Flüssigkeitsdämpfer mit inhärenter viskoser Dämpfung oder durch Rühren eines Teils der schwingenden Masse bzw. eines davon abstehenden Tauchkörpers in einer viskosen Flüssigkeit.

Vorzugsweise wird zur Anpassung der Eigenfrequenz bei einem Pendeldämpfer in Kombination mit Federn an der Pendelmasse die Anzahl der Federn reduziert oder vergrößert wird und/oder eingesetzte Federn durch Federn mit einer geringeren oder größeren Federkraft ersetzt werden.

Zur Anpassung der Eigenfrequenz bei einem Pendeldämpfer wird erfindungsgemäß die Pendellänge (L₁, L₂) vergrößert oder verkleinert, wobei die Pendellänge (L₁, L₂) durch Abknicken an Trägern oder an einer temporären Plattform im Turm eingestellt wird, oder durch Fixieren von Kettengliedern.

Die zu den Dämpfertypen genannten Maßnahmen zur Verringerung der Eigenfrequenz sind vorteilhafterweise umkehrbar, um die Eigenfrequenz wieder zu erhöhen.

Die der Erfindung zugrundeliegende Aufgabe wird auch durch eine Windenergieanlage mit einem Turm aus mehreren Turmsektionen und einem auf der Spitze des Turms angeordneten Maschinenhaus und einem Rotor mit im Wesentlichen horizontaler Rotorachse gelöst, die nach einem erfindungsgemäßen zuvor beschriebenen Verfahren errichtet ist, umfassend wenigstens einen zuvor genannten erfindungsgemäßen als Pendeldämpfer ausgebildeten Schwingungsdämpfer, der im Turm unterhalb des Maschinenhauses in einem oberen Bereich einer obersten Turmsektion des Turms angeordnet und in seiner Eigenfrequenz an eine Grundschwingungsfrequenz des Turmrohbaus ohne aufgesetzte Maschinengondel und an eine Grundschwingungsfrequenz der vollständig errichteten Windenergieanlage anpassbar ist.

Diese Windenergieanlage ist bereits im Turmrohbaustadium durch Einsatz eines entsprechenden Schwingungsdämpfers standsicherer gemacht worden, so dass es möglich ist, die Turmsektionen und den Turm auf geringere Lastanforderungen hin zu dimensionieren. Alternativ wird die Standfestigkeit und Widerstandsfähigkeit erhöht.

Die das Resultat des Verfahrens betreffenden Merkmale, Eigenschaften und Vorteile des zuvor beschriebenen erfindungsgemäßen Verfahrens sind bei der entsprechenden Windenergieanlage verwirklicht.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a), b): schematische Darstellungen einer Windenergieanlage und eines Turmrohbaus,
- Fig. 2: eine schematische Darstellung einer erfindungsgemäßen Windenergieanlage,
- Fig. 3: eine schematische Darstellung eines weiteren Schwingungsdämpfers und
- Fig. 4a), b): schematische Darstellungen weiterer Schwingungsdämpfer.

In den Zeichnungen sind jeweils gleiche oder gleichartige Elemente und/oder Teile mit denselben Bezugsziffern versehen, so dass von einer erneuten Vorstellung jeweils abgesehen wird.

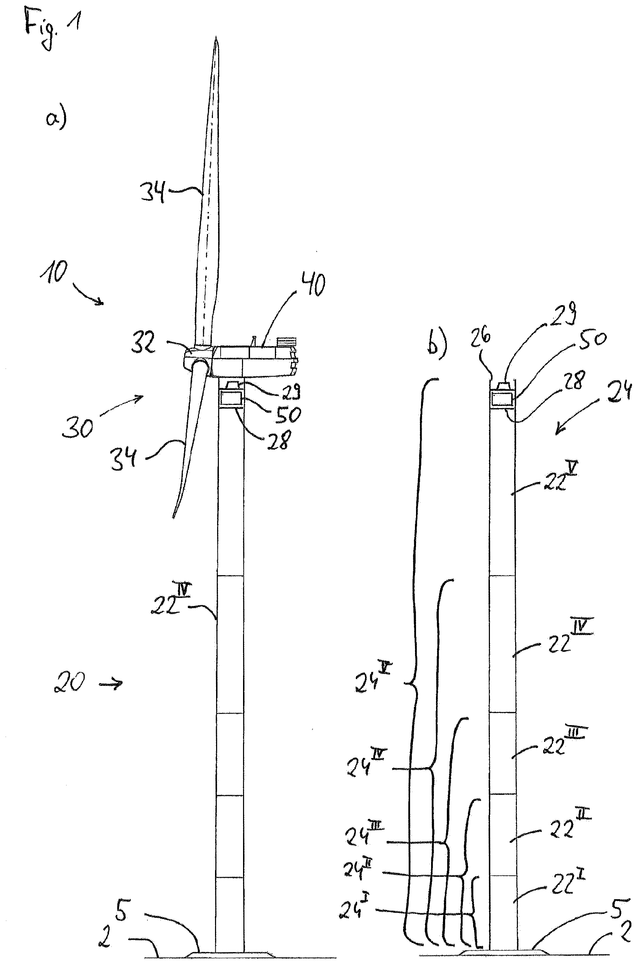

Fig. 1a) zeigt eine gattungsgemäße Windenergieanlage 10, in diesem Fall eine Onshore-Windenergieanlage, die auf einem Untergrund 2 steht. Bei Offshore-Windenergieanlagen ist der Untergrund 2 unter Wasser, so dass ein Unterbau in Form einer Gründungsstruktur vorhanden ist, der im Untergrund 2 gegründet ist und oberhalb des Wasserspiegels endet. Auf diesem Unterbau ist dann ein Turm 20 errichtet.

Bei der in Fig. 1a) gezeigten Onshore-Windenergieanlage ist der oberflächliche Teil einer Gründung 5 bzw. eines Fundaments auf dem Untergrund 2 erkennbar, auf dem ein Turm 14 mit fünf Turmsektionen 22^{I} bis 22^{V} errichtet ist, von der in Fig. 1a) die zweitoberste Turmsektion 22^{IV} beispielhaft bezeichnet ist. Die Höhe der einzelnen Turmsektionen 22^{I} bis 22^{V} nimmt von unten nach oben zu. Der Turm 20 kann sich nach oben hin verjüngen, einen konstanten Durchmesser aufweisen oder auch Knickstellen in der Kontur aufweisen, d.h. dass der Turm so ausgeführt ist, dass er nach einer Verjüngung im unteren Bereich sich im oberen Bereich nach oben hin aufweitet. Dies ist besonders vorteilhaft, wenn in einem relativ schlanken Turm ausreichend Platz für den Einbau eines Schwingungsdämpfers geschaffen wird. An der Spitze des Turms 20 ist ein Maschinenhaus 40 angeordnet, wobei Fig. 1a) eine Seitenansicht des Maschinenhauses 40 mit einem Rotor 30 zeigt, der eine Rotornabe 32 mit einer auch "Spinner" genannten Abdeckung und drei Rotorblätter 34 aufweist. In der Seitenansicht ist das obere Rotorblatt 34 in voller Länge zu sehen, von den zwei um 120° versetzt angeordneten Rotorblättern 34 ist nur das nähere perspektivisch verkürzt sichtbar, das das in der Bildebene dahinter angeordnete dritte Rotorblatt verdeckt.

Im oberen Teil der obersten Turmsektion 22^{V} unterhalb des Maschinenhauses 40 ist ein Schwingungsdämpfer 50 zwischen einer Plattform 28 und einer Aufstiegplattform 29 angeordnet, die einen Aufstieg in die Gondel bzw. das Maschinenhaus 40 ermöglicht. Der Schwingungsdämpfer 50 dämpft Turmschwingungen während des Betriebs der Windenergieanlage 10.

In Fig. 1b) ist der Turm 20 aus Fig. 1a) als Turmrohbau 24 ohne aufgesetzte Gondel bzw. Maschinenhaus 40 dargestellt. Links neben dem Turmrohbau 24 sind mit geschweiften Klammern die Turmrohbaustadien 24^{I} bis 24^{V} dargestellt, die durch Aufrichten und Aufsetzen der entsprechenden Turmsektion 22^{I} bis 22^{V} entstehen. Der Schwingungsdämpfer 50 ist in der obersten Turmsektion 22^{V} angeordnet. Ebenfalls angedeutet ist ein oberer Turmanschlussflansch 26 zur Montage des Maschinenhauses 40, insbesondere einer nicht dargestellten Azimutverstelleinheit.

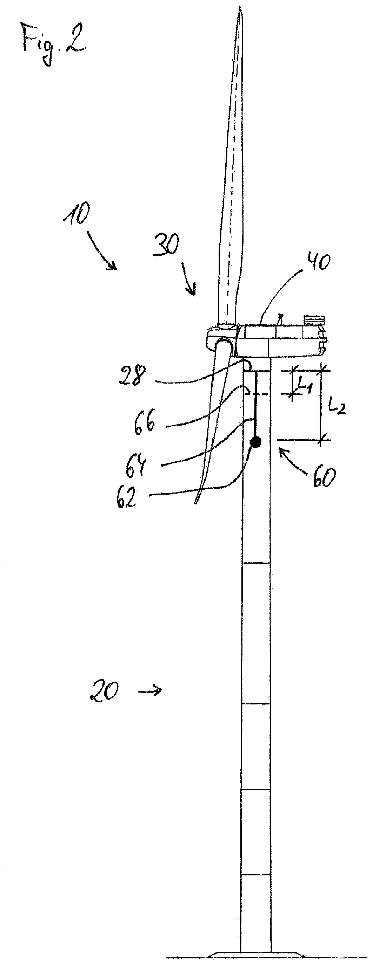

In Fig. 2 ist ein Ausführungsbeispiel einer erfindungsgemäßen Windenergieanlage 10 mit einem Pendeldämpfer 60 dargestellt. Ein Pendel 64 mit einer Pendelmasse 62 und einer Pendellänge L₂ ist an einer Plattform 28 in der obersten Turmsektion 22^{V} aufgehängt. Die Pendellänge L₂ ist vorzugsweise so ausgelegt, dass der Pendeldämpfer 60 die erste Biegeeigenform des Turms 20 der fertig errichteten Windenergieanlage dämpft. Für den Rohbauzustand ist eine temporäre Plattform 66 unterhalb der Plattform 28 dargestellt, die eine Restriktion für das Pendel 64 darstellt. Das Pendel knickt an der Restriktion ab. Die wirksame Pendellänge unterhalb der Restriktion beträgt nur noch L₂ - L₁. Im Ausführungsbeispiel ist das Längenverhältnis von L₁:L₂ ungefähr 1:3, so dass die Pendelfrequenz durch Wegnahme der temporären Plattform um einen Faktor von ca. 2,25 verringerbar ist.

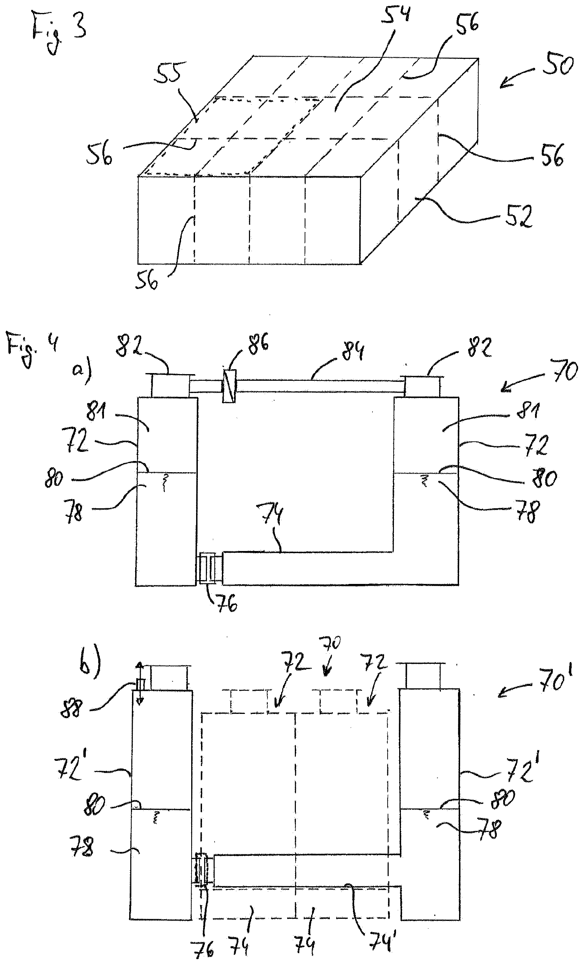

Fig. 3 ist eine schematische Darstellung eines Schwingungsdämpfers in Form eines Schwappdämpfers 50, wie er beispielsweise in Fig. 1 angedeutet wurde. Dieser weist äußere Seitenwände 52 auf, die ein Schwapp-Gesamtvolumen einschließen. In das Gesamtvolumen sind entnehmbare Schottbleche 56 eingelassen, die das Gesamtvolumen in einzelne Schwappkammern 54 unterteilen. Zur Verringerung der Eigenfrequenz des Schwappdämpfers 50 werden einzelne oder alle Schottbleche 56 entfernt, so dass sich die einzelnen Schwappkammern 54 zu erweiterten Schwappkammern verbinden oder schließlich das Gesamtvolumen ohne Unterteilungen als Schwappkammer dient. Dies erfolgt vorzugsweise kurz vor oder nach dem Aufsetzen eines Maschinenhauses auf den Turm.

In Fig. 4a) und 4b) sind schematische Darstellungen weiterer Schwingungsdämpfer in Form von TLCD-Schwingungsdämpfern 70, 70' gezeigt.

Der in Fig. 4a) gezeigte TLCD-Schwingungsdämpfer 70 weist zwei Steigrohre 72 auf, die durch ein Horizontalrohr 74 im unteren Bereich miteinander verbunden sind. Um die Steigrohre 72 miteinander zu verbinden, ist das Horizontalrohr 74 aus zwei Teilen aufgebaut, die mittels einer Rohrkupplung 76 miteinander verbunden sind. Die Steigrohre 72 und das Horizontalrohr 74 bilden zusammen ein im Wesentlichen "U"-förmiges Rohr, das mit Salzwasser 78 teilweise gefüllt ist. Wenn der TLCD 70 in einem schwingenden Turm 10 oder einem schwingenden Turmrohbau 24 eingebaut ist, wird die Wassersäule 78 in Schwingung gesetzt, so dass die Pegel 80 des Salzwassers 78 in den Steigrohren (72, 72') gegenläufig steigen und fallen. Die gegenüber einem Schwappdämpfer geringere Wassermenge wird durch eine höhere Amplitude bzw. einen höheren Hub des Salzwassers 78 in den Steigrohren 72 ausgeglichen.

Oberhalb des Salzwassers 78 befinden sich Luftvolumen bzw. Luftsäulen 81 in den Steigrohren 72. Wenn diese zur Außenluft hin abgeschlossen sind, ergibt sich ein Luftfedereffekt, wobei die Komprimierung der Luft in der Luftsäule 81 bei steigendem Pegel 80 eine rücktreibende Kraft auf die Oberfläche des Wassers 78 ausübt. Wenn die Luftsäule 81 auf der gegenüberliegenden Seite ebenfalls abgeschlossen ist, ergibt sich bei dort fallendem Pegel ein Unterdruck, also eine Kraft, die das Wasser 78 wieder nach oben saugt. Dieser Luftfedereffekt, der der Schwingungsrichtung des Salzwassers 78 entgegengesetzt ist, erhöht die Schwingungsfrequenz.

Im oberen Teil der Steigrohre 72 sind Mannlöcher 82 zum Ein- und Ausstieg in die Steigrohre 72 vorhanden, die im normalen Betrieb vorzugsweise verschlossen sind, um zu verhindern, dass das Salzwasser 78 im Laufe der Jahre des Betriebs der Windenergieanlage 10 durch Verdunstung verloren geht. Die Luftsäulen 81 in den Steigrohren 72 sind in diesem Ausführungsbeispiel mit einem Verbindungsrohr 84 miteinander verbunden, in dem eine Absperrklappe 86 angeordnet ist. Wenn die Absperrklappe 86 geöffnet ist, sind die Luftsäulen 81 der beiden Steigrohre 72 miteinander verbunden und es baut sich kein Luftfedereffekt auf. Wird die Absperrklappe 86 geschlossen, sind die Luftsäulen 81 voneinander getrennt und es bildet sich ein Luftfedereffekt in beiden Steigrohren 72.

Fig. 4b) zeigt ein weiteres Ausführungsbeispiel eines TLCD-Schwingungsdämpfers 70'. Dieser unterscheidet sich von dem TLCD-Schwingungsdämpfer 70 aus Fig. 4a) vor allem dadurch, dass kein Verbindungsrohr 84 zwischen den Steigrohren 72' vorhanden ist, dafür allerdings wenigstens ein Steigrohr 72' ein Druckentlastungsventil 88 an seiner Oberseite aufweist, das sich bei Ausbildung eines zu hohen Überdrucks bzw. Unterdrucks in der Luftsäule 72' öffnet.

Wie in Fig. 4b) weiter zu erkennen ist, kann der TLCD 70' mit wenigstens einem weiteren TLCD 70 kreuzweise kombiniert werden. So wird eine Schwingungsdämpfung für Schwingungen in unterschiedlichen Richtungen realisiert. Um die Kreuzung der Horizontalrohre 74, 74' zu bewerkstelligen, sind diese vertikal gestaffelt angeordnet. Die wirksame Gesamthöhe der Steigrohre 72 ist die gleiche wie die der Steigrohre 72', da in letzteren das Volumen unterhalb der Unterkante des Horizontalrohrs 74' nicht an der Schwingung teilnimmt. Dieser untere Teil erhöht jedoch die Standfestigkeit des TLCD-Schwingungsdämpfers 70'.

Bei dem in Fig. 4a) und 4b) gezeigten Ausführungsbeispiel lässt sich der Luftfederdruck in mehreren Stufen regulieren. Im Endzustand der Windenergieanlage kann die Absperrklappe 86 im Verbindungsrohr 84 im Normalbetrieb geöffnet sein. Der Luftfedereffekt entfällt somit vollständig. Beim Schließen der Absperrklappe 86 kann ein Steigrohr 72, 72' offen bleiben und das andere, das dann ein Druckentlastungsventil 88 benötigt, verschlossen sein, so dass ein einseitiger Luftfedereffekt entsteht. In einer weiteren Verstärkung können beide Steigrohre 72, 72' verschlossen werden und gegebenenfalls mit Druckentlastungsventilen ausgestattet sein oder werden. Es ergibt sich in diesem Fall ein stärkerer, weil beidseitiger, Luftfedereffekt.

### Bezugszeichenliste

- 2: Untergrund
- 5: Gründung
- 10: Windenergieanlage
- 20: Turm
- 22^{I} - 22^{V}: Turmsektion
- 24: Turmrohbau
- 24^{I} - 24^{V}: Turmrohbaustadium
- 26: oberer Turmanschlussflansch
- 28: Plattform
- 29: Aufstiegsplattform
- 30: Rotor
- 32: Rotornabe
- 34: Rotorblatt
- 40: Maschinenhaus
- 50: Schwappdämpfer
- 52: Seitenwand
- 54: Schwappkammer
- 55: erweiterte Schwappkammer
- 56: entnehmbares Schottblech
- 60: Pendeldämpfer
- 62: Pendelmasse
- 64: Pendel
- 66: temporäre Plattform
- 70, 70': TLCD-Schwingungsdämpfer
- 72, 72': Steigrohr
- 74, 74': Horizontalrohr
- 76: Rohrkupplung
- 78: Salzwasser
- 80: Wasserpegel
- 81: Luftsäule
- 82: Mannloch
- 84: Verbindungsrohr
- 86: Absperrklappe
- 88: Druckentlastungsventil
- L₁: verkürzende Pendellänge
- L₂: volle Pendellänge

## Patentansprüche

1. Verfahren zum Errichten einer Windenergieanlage (10) mit einem Turm (20) und einem an der Turmspitze angeordneten Maschinenhaus (40), wobei zunächst ein Turmrohbau (24) errichtet wird, indem in einer Turmrohbauphase, in der auf dem Turmrohbau (24) noch kein Maschinenhaus (40) aufgesetzt ist, in einem Turmrohbaustadium (24^{I} - 24^{V}) oder in mehreren Turmrohbaustadien (24^{I} - 24^{V}) eine oder mehrere Turmsektionen (22^{I} - 22^{V}) zu einem, im Falle mehrerer Turmsektionen (22^{I} - 22^{V}) mit jeder Turmsektion (22^{I} - 22^{V}) größer werdenden, Turmrohbau (24) aufeinandergesetzt werden, bis eine Endhöhe des Turmrohbaus (24) erreicht ist, wobei nach vollständiger Errichtung des Turmrohbaus (24) aus allen Turmsektionen (22^{I} - 22^{V}) das Maschinenhaus (40) auf die Spitze des Turmrohbaus (24) aufgesetzt wird und mit dem Turmrohbau (24) drehbar verbunden wird, wobei wenigstens ein als Pendeldämpfer (60) ausgebildeter Schwingungsdämpfer in einer zuletzt zur Fertigstellung des Turmrohbaus (24) aufgesetzten Turmsektion (22^{V}) angeordnet wird, dessen Eigenfrequenz an eine erste Grundschwingungsfrequenz des Turmrohbaus (24) ohne aufgesetztes Maschinenhaus (40) angepasst ist, wobei der wenigstens eine Pendeldämpfer (60) nach dem Aufsetzen des Maschinenhauses (40) auf den Turmrohbau (24) im Turm (20) verbleibt und die Eigenfrequenz des wenigstens einen Pendeldämpfers (60) an eine zweite Grundschwingungsfrequenz der vollständig errichteten Windenergieanlage (10) angepasst wird oder worden ist, **dadurch gekennzeichnet, dass** im Zuge der Errichtung des Turmrohbaus (24) zur Anpassung der Eigenfrequenz des wenigstens einen Pendeldämpfers (60) die Pendellänge (L₁, L₂) vergrößert wird, wobei die Pendellänge (L₁, L₂) durch Abknicken an Trägern oderan einer temporären Plattform (66) im Turm (20) eingestellt wird, oder durch Fixieren von Kettengliedern.

2. Verfahren nach Anspruch 1, **dadurch gekennzeichnet, dass** die Anpassung der Eigenfrequenz des wenigstens einen Pendeldämpfers (60) an die Grundschwingungsfrequenz der vollständig errichteten Windenergieanlage (10) nach oder kurz vor dem Aufsetzen des Maschinenhauses (40) auf den Turm (20) bzw. Turmrohbau (24) erfolgt.

3. Verfahren nach Anspruch 1 oder 2, **dadurch gekennzeichnet, dass** die Eigenfrequenzdeswenigstens einen Pendeldämpfers (60) zwischen wenigstens einer ersten Frequenz im Bereich von 0,2 bis 1 Hz und wenigstens einer zweiten Frequenz im Bereich von 0,1 bis 0,3 Hz veränderbar ist, wobei sich die erste Frequenz und die zweite Frequenz um einen Faktor von 2 oder mehr, insbesondere um wenigstens einen Faktor 3, voneinander unterscheiden.

4. Verfahren nach einem der Ansprüche 1 bis 3, **dadurch gekennzeichnet, dass** der wenigstens eine Pendeldämpfer (60) als Pendeldämpfer in Kombination mit Federn an der Pendelmasse ausgebildet ist, wobei der Pendeldämpfer (60) insbesondere eine viskose Dämpfung umfasst.

5. Verfahren nach einem der Ansprüche 1 bis 4, **dadurch gekennzeichnet, dass** im Zuge der Errichtung des Turmrohbaus (24) zur Anpassung der Eigenfrequenzdeswenigstens einen Pendeldämpfers (60) bei einem Pendeldämpfer (60) in Kombination mit Federn an der Pendelmasse (62) die Anzahl der Federn reduziert wird und/oder eingesetzte Federn durch Federn mit einer geringeren Federkraft ersetzt werden.

6. Verfahren nach einem der Ansprüche 1 bis 5, **dadurch gekennzeichnet, dass** Grundschwingungsfrequenzen eines Turmrohbaus (24) in wenigstens einem Turmrohbaustadium (24^{I} - 24^{V}) und der vollständig errichteten Windenergieanlage (10) bereits vor Beginn der Errichtung der Windenergieanlage (10) berechnet oder bestimmt worden sind und die Eigenfrequenzen des wenigstens einen Pendeldämpfers (60) hieran angepasst sind.

7. Schwingungsdämpfersystem für eine Windenergieanlage (10), umfassend einen Schwingungsdämpfer und mindestens einen Träger oder eine temporäre Plattform, das in einer zuletzt zur Fertigstellung des Turmrohbaus (24) aufgesetzten Turmsektion (22^{V}) befestigbar ist, wobei eine Eigenfrequenz des Schwingungsdämpfers an eine erste Grundschwingungsfrequenz eines Turmrohbaus (24) der Windenergieanlage (10) ohne aufgesetztes Maschinenhaus (40) und an eine zweite Grundschwingungsfrequenz der Windenergieanlage (10) mit aufgesetztem Maschinenhaus (40) anpassbar ist, wobei der Schwingungsdämpfer als Pendeldämpfer (60) ausgebildet ist, **dadurch gekennzeichnet, dass** zur Anpassung der Eigenfrequenz bei einem Pendeldämpfer (60) die Pendellänge (L₁, L₂) vergrößert oder verkleinert wird, wobei die Pendellänge (L₁, L₂) durch Abknicken an den Trägern oder an der temporären Plattform (66) im Turm (20) eingestellt wird.

8. Schwingungsdämpfersystem nach Anspruch 7, **dadurch gekennzeichnet, dass** die Eigenfrequenz des wenigstens einen Schwingungsdämpfers zwischen wenigstens einer ersten Frequenz im Bereich von 0,2 bis 1 Hz und wenigstens einer zweiten Frequenz im Bereich von 0,1 bis 0,3 Hz veränderbar ist, wobei sich die erste Frequenz und die zweite Frequenz um einen Faktor von 2 oder mehr, insbesondere um wenigstenseinen Faktor 3, voneinander unterscheiden

9. Schwingungsdämpfersystem nach Anspruch 7 oder 8, **dadurch gekennzeichnet, dass** der Pendeldämpfer (60) als Pendeldämpfer in Kombination mit Federn an der Pendelmasse, insbesondere mit viskoser Dämpfung, ausgebildet ist.

10. Schwingungsdämpfersystem nach Anspruch 9, **dadurch gekennzeichnet, dass** zur Anpassung der Eigenfrequenz bei einem Pendeldämpfer (60) in Kombination mit Federn an der Pendelmasse (62) die Anzahl der Federn reduziert oder vergrößert wird und/oder eingesetzte Federn durch Federn mit einer geringeren oder größeren Federkraft ersetzt werden.

11. Windenergieanlage (10) mit einem Turm (20) aus mehreren Turmsektionen (22^{I} - 22^{V}) und einem auf der Spitze des Turms (20) angeordneten Maschinenhaus (40) und einem Rotor (30) mit im Wesentlichen horizontaler Rotorachse, errichtet nach einem Verfahren nach einem der Ansprüche 1 bis 6, umfassend wenigstens ein Schwingungsdämpfersystem nach einem der Ansprüche 7 bis 10, das im Turm (20) unterhalb des Maschinenhauses (40) in einem oberen Bereich einer obersten Turmsektion (22^{V}) des Turms (20) angeordnet und in seiner Eigenfrequenz an eine Grundschwingungsfrequenz des Turmrohbaus (24) ohne aufgesetzte Maschinengondel (40) und an eine Grundschwingungsfrequenz der vollständig errichteten Windenergieanlage (10) anpassbar ist.

## Claims

1. A method of erecting a wind energy installation (10) comprising a tower (20) and a nacelle (40) arranged at the top of the tower, wherein initially a tower body structure (24) is erected by putting, during a period of constructing the tower body structure, during which no nacelle (40) is placed on top of the tower body structure (24) yet, one or more tower sections (22^{I} - 22^{V}) on top of another, in one or more stages (24^{I} - 24^{V}) of constructing the tower body structure, to form a tower body structure (24) which, in the case of several tower sections (22^{I} - 22^{V}), becomes bigger with each tower section (22^{I} - 22^{V}), until a final height of the tower body structure (24) is reached, wherein, after the tower body structure (24) has been fully erected from all tower sections (22^{I} - 22^{V}), the nacelle (40) is placed on top of the tower body structure (24) and is rotatably attached to the tower body structure (24), wherein at least one vibration damper formed as a tuned mass damper (60) is arranged in a final tower section (22^{V}) put in place for completing the tower body structure (24), whose natural frequency is adapted to a first fundamental frequency of the tower body structure (24) without nacelle (40) placed on top, wherein the at least one tuned mass damper (60) remains in the tower (20) after the nacelle (40) has been placed on top of the tower body structure (24) and the natural frequency of the at least one tuned mass damper (60) is or has been adapted to a second fundamental frequency of the fully erected wind energy installation (10), **characterized in that**, during the course of the erection of the tower body structure (24), the pendulum length (L₁, L₂) is increased for the purpose of adapting the natural frequency of the at least one tuned mass damper (60), wherein the pendulum length (L₁, L₂) is adjusted by bending at support beams or at a temporary platform (66) in the tower (20), or by means of fixing chain links.

2. The method according to claim 1, **characterized in that** the adaptation of the natural frequency of the at least one tuned mass damper (60) to the fundamental frequency of the fully erected wind energy installation (10) takes place after, or shortly before, the placing of the nacelle (40) on top of the tower (20) or the tower body structure (24).

3. The method according to claim 1 or 2, **characterized in that** the natural frequency of the at least one tuned mass damper (60) is adjustable between at least a first frequency in the range of 0.2 to 1 Hz and at least a second frequency in the range of 0.1 to 0.3 Hz, wherein the first frequency and the second frequency differ from each other by a factor of 2 or more, in particular by at least a factor of 3.

4. The method according to any one of the claims 1 to 3, **characterized in that** the at least one tuned mass damper (60) is formed as a tuned mass damper in combination with springs at the pendulum mass, wherein the tuned mass damper (60) comprises in particular a viscous damping.

5. The method according to any one of the claims 1 to 4, **characterized in that**, during the course of the erection of the tower body structure (24), for the purpose of adapting the natural frequency of the at least one tuned mass damper (60), at one tuned mass damper (60) in combination with springs at the pendulum mass (62) the number of springs is reduced and/or installed springs are replaced by springs with a lower spring force.

6. The method according to any one of the claims 1 to 5, **characterized in that** fundamental frequencies of a tower body structure (24) in at least one stage (24^{I}-24^{V}) of constructing the tower body structure and of the fully erected wind energy installation (10) have been calculated or have been determined already prior to the start of the erection of the wind energy installation (10) and the natural frequencies of the at least one tuned mass damper (60) are adapted thereto.

7. A vibration damping system for a wind energy installation (10), comprising a vibration damper and at least one support beam or a temporary platform, which vibration damping system can be fixed within a final tower section (22^{V}) put in place for completing the tower body structure (24), wherein a natural frequency of the vibration damper can be adapted to a first fundamental frequency of a tower body structure (24) of the wind energy installation (10) without nacelle (40) placed on top, and to a second fundamental frequency of the wind energy installation (10) with nacelle (40) placed on top, wherein the vibration damper is formed as a tuned mass damper (60), **characterized in that**, for the purpose of adapting the natural frequency, the pendulum length (L₁, L₂) of one tuned mass damper (60) is increased or reduced, wherein the pendulum length (L₁, L₂) is adjusted by bending at the support beams or at the temporary platform (66) within the tower (20).

8. The vibration damping system according to claim 7, **characterized in that** the natural frequency of the at least one vibration damper is adjustable between at least a first frequency in the range of 0.2 to 1 Hz and at least a second frequency in the range of 0.1 to 0.3 Hz, wherein the first frequency and the second frequency differ from each other by a factor of 2 or more, in particular by at least a factor of 3.

9. The vibration damping system according to claim 7 or 8, **characterized in that** the tuned mass damper (60) is formed as a tuned mass damper in combination with springs at the pendulum mass, in particular with viscous damping.

10. The vibration damping system according to claim 9, **characterized in that**, for the purpose of adapting the natural frequency, at one tuned mass damper (60) in combination with springs at the pendulum mass (62) the number of springs is reduced or increased and/or installed springs are replaced by springs with a lower or a greater spring force.

11. A wind energy installation (10) with a tower (20) made from several tower sections (22^{I} - 22^{V}) and a nacelle (40) arranged at the top of the tower (20) and a rotor (30) with a substantially horizontal rotor axis, erected according to a method according to any one of the claims 1 to 6, comprising
at least one vibration damping system according to any one of the claims 7 to 10, which is arranged in the tower (20) below the nacelle (40) in an upper region of a topmost tower section (22^{V}) of the tower (20) and whose natural frequency can be adapted to a fundamental frequency of the tower body structure (24) without nacelle (40) placed on top and to a fundamental frequency of the fully erected wind energy installation (10).

## Revendications

1. Procédé servant à construire une éolienne (10) comprenant une tour (20) et une salle des machines (40) disposée au niveau de la pointe de tour, dans lequel au moins un gros œuvre de tour (24) est construit dans un premier temps en ce que lors d'une phase de gros œuvre de tour, dans laquelle aucune salle des machines (40) n'est placée encore sur le gros œuvre de tour (24), une ou plusieurs sections de tour (22^{I} - 22^{V}) sont placées les unes sur les autres en un gros œuvre de tour (24) devenant plus grand avec chaque section de tour (22^{I} - 22^{V}) dans le cas de plusieurs sections de tour (22^{I} - 22^{V}) lors d'un stade de gros œuvre de tour (24^{I} - 24^{V}) ou lors de plusieurs stades de gros œuvre de tour (24^{I} -24^{V}) jusqu'à ce qu'une hauteur finale du gros œuvre de tour (24) soit atteinte, dans lequel une fois la construction du gros œuvre de tour (24) complétée à partir de toutes les sections de tour (22^{I} - 22^{V}), la salle des machines (40) est placée sur la pointe du gros œuvre de tour (24) et est reliée de manière à pouvoir tourner au gros œuvre de tour (24), dans lequel au moins un amortisseur de vibrations réalisé sous la forme d'un amortisseur pendulaire (60) est disposé dans une section de tour (22^{V}) placée en dernier lieu pour finaliser le gros œuvre de tour (24), dont la fréquence propre est adaptée à une première fréquence de vibration de base du gros œuvre de tour (24) sans salle des machines (40) placée, dans lequel l'au moins un amortisseur pendulaire (60) reste dans la tour (20) après le placement de la salle des machines (40) sur le gros œuvre de tour (24) et la fréquence propre de l'au moins un amortisseur pendulaire (60) est adaptée ou a été adaptée à une deuxième fréquence de vibration de base de l'éolienne (10) complètement construite, **caractérisé en ce que** dans le cadre de la construction du gros œuvre de tour (24), la longueur pendulaire (L₁, L₂) est agrandie aux fins de l'adaptation de la fréquence propre de l'au moins un amortisseur pendulaire (60), dans lequel la longueur pendulaire (L₁, L₂) est réglée par pliage au niveau de supports ou au niveau d'une plate-forme (66) temporaire dans la tour (20) ou par la fixation de maillons de chaîne.

2. Procédé selon la revendication 1, **caractérisé en ce que** l'adaptation de la fréquence propre de l'au moins un amortisseur pendulaire (60) à la fréquence de vibration de base de l'éolienne (10) complètement construite est effectuée après ou peu avant le placement de la salle des machines (40) sur la tour (20) ou le gros œuvre de tour (24) .

3. Procédé selon la revendication 1 ou 2, **caractérisé en ce que** la fréquence propre de l'au moins un amortisseur pendulaire (60) peut varier entre au moins une première fréquence située dans la plage allant de 0,2 à 1 Hz et au moins une deuxième fréquence située dans la plage allant de 0,1 à 0,3 Hz, dans lequel la première fréquence et la deuxième fréquence se distinguent l'une de l'autre d'un facteur de 2 ou plus, en particulier d'au moins un facteur de 3.

4. Procédé selon l'une quelconque des revendications 1 à 3, **caractérisé en ce que** l'au moins un amortisseur pendulaire (60) est réalisé sous la forme d'un amortisseur pendulaire en combinaison avec des ressorts au niveau de la masse pendulaire, dans lequel l'amortisseur pendulaire (60) comprend en particulier un amortissement visqueux.

5. Procédé selon l'une quelconque des revendications 1 à 4, **caractérisé en ce que** dans le cadre de la construction du gros œuvre de tour (24), le nombre des ressorts est réduit et/ou des ressorts employés sont remplacés par des ressorts présentant une force élastique inférieure afin d'adapter la fréquence propre de l'au moins un amortisseur pendulaire (60) dans le cas d'un amortisseur pendulaire (60) en combinaison avec des ressorts à la masse pendulaire (62).

6. Procédé selon l'une quelconque des revendications 1 à 5, **caractérisé en ce que** des fréquences de vibration de base d'un gros œuvre de tour (24) ont été calculées ou définies lors d'au moins un stade de gros œuvre de tour (24^{I} - 24^{V}) et de l'éolienne (10) complètement construite dès le début de la construction de l'éolienne (10), et les fréquences propres de l'au moins un amortisseur pendulaire (60) y sont adaptées.

7. Système amortisseur de vibrations pour une éolienne (10), comprenant un amortisseur de vibrations et au moins un support ou une plate-forme temporaire, qui peut être fixé dans une section de tour (22^{V}) placée en dernier lieu afin de finaliser le gros œuvre de tour (24), dans lequel une fréquence propre de l'amortisseur de vibrations peut être adaptée à une première fréquence de vibration de base d'un gros œuvre de tour (24) de l'éolienne (10) sans salle des machines (40) placée et à une deuxième fréquence de vibration de base de l'éolienne (10) avec une salle des machines (40) placée, dans lequel l'amortisseur de vibrations est réalisé sous la forme d'un amortisseur pendulaire (60), **caractérisé en ce que** la longueur pendulaire (L₁, L₂) est agrandie ou réduite aux fins de l'adaptation de la fréquence propre dans le cas d'un amortisseur pendulaire (60), dans lequel la longueur pendulaire (L₁, L₂) est réglée par pliage au niveau des supports ou au niveau de la plate-forme (66) temporaire dans la tour (20).

8. Système amortisseur de vibrations selon la revendication 7, **caractérisé en ce que** la fréquence propre de l'au moins un amortisseur de vibrations peut varier entre au moins une première fréquence située dans la plage allant de 0,2 à 1 Hz et au moins une deuxième fréquence située dans la plage allant de 0,1 à 0,3 Hz, dans lequel la première fréquence et la deuxième fréquence se distinguent l'une de l'autre d'un facteur de 2 ou plus, en particulier d'au moins un facteur de 3.

9. Système amortisseur de vibrations selon la revendication 7 ou 8, **caractérisé en ce que** l'amortisseur pendulaire (60) est réalisé sous la forme d'un amortisseur pendulaire en combinaison avec des ressorts au niveau de la masse pendulaire, en particulier avec un amortissement visqueux.

10. Système amortisseur de vibrations selon la revendication 9, **caractérisé en ce que** le nombre des ressorts est réduit ou augmenté et/ou des ressorts employés sont remplacés par des ressorts présentant une force élastique inférieure ou supérieure aux fins de l'adaptation de la fréquence propre dans le cas d'un amortisseur pendulaire (60) en combinaison avec des ressorts à la masse pendulaire (62).

11. Eolienne (10) comprenant une tour (20) composée de plusieurs sections de tour (22^{I} - 22^{V}) et d'une salle des machines (40) disposée sur la pointe de la tour (20) et d'un rotor (30) comprenant un axe de rotor sensiblement horizontal, construite selon un procédé selon l'une quelconque des revendications 1 à 6, comprenant au moins un système amortisseur de vibrations selon l'une quelconque des revendications 7 à 10, qui est disposé dans la tour (20) sous la salle des machines (40) dans une zone supérieure d'une section de tour (22^{V}) la plus haute de la tour (20) et dont la fréquence propre peut être adaptée à une fréquence de vibration de base du gros œuvre de tour (24) sans nacelle (40) placée et à une fréquence de vibration de base de l'éolienne (10) complètement construite.
